# EUROPEAN PATENT APPLICATION

(11) **EP 4 501 511 A1**
(43) Date of publication of application: **05.02.2025**
(21) Application number: 23778924.3
(22) Date of filing: 13.02.2023
(51) Int. Cl.: B23K 9/095, B23K 9/127, B23K 31/00, G06T 7/00, G06V 10/74

(54) **ABNORMALITY DETERMINATION METHOD, PROCESSING METHOD DURING ABNORMALITY, INFORMATION PROCESSING DEVICE, WELDING SYSTEM, AND PROGRAM**

(30) Priority: 30.03.2022 JP 2022057505
(71) Applicant: KABUSHIKI KAISHA KOBE SEIKO SHO (KOBE STEEL, LTD.), Hyogo 651-8585 (JP)
(72) Inventor: YOSHIMOTO, Tatsuya, Hyogo 651-2271 (JP); OZAKI, Keita, Hyogo 651-2271 (JP); FURUKAWA, Naohide, Kanagawa 251-8551 (JP)
(74) Representative: Müller-Boré & Partner Patentanwälte PartG mbB
(86) International application number: PCT/JP2023/004867
(87) International publication number: WO 2023/188890

(57) **Abstract**

Provided is an abnormality determination method which determines an abnormality in one or a plurality of pieces of feature point information extracted from image data, wherein the abnormality determination method comprises: a calculating step for calculating geometric quantity data derived from the one or plurality of pieces of feature point information; an abnormality detection step for detecting abnormality for time-series data composed of the geometric quantity data by using one or a plurality of abnormality detection means that are predetermined in correspondence to an abnormality reason; and a determining step for determining the occurrence of the abnormality in the time-series data on the basis of the detection result from the one or plurality of abnormality detection means.

## Description

### Technical Field

The present invention relates to an abnormality determination method, a processing method at time of abnormality, an information processing apparatus, a welding system, and a program

### Background Art

In recent years, visual sensors have been adopted by the production sites of various industries, and they are trying to achieve increase in productivity and quality improvement by applying image recognition techniques to the image data obtained by the visual sensors. In the image recognition, it is practiced that the features of the captured image data are analyzed by various techniques, feature points or feature quantities are extracted from the image, and image data is identified based on these.

As an example of a field where the productivity is being increased by applying the image recognition techniques, the field of welding may be mentioned. In such a field, for example, PTL 1 is quoted. PTL 1 discloses that in a horizontally extending groove formed between two members to be welded arranged in a vertical direction, let the welding travel direction be forward direction, then automatic welding is possible in one-side welding and in horizontal position by a system including: a welding robot configured to perform arc welding while weaving a welding torch alternately in a forward lower direction and a rearward upper direction; a camera configured to capture an arc and a molten pool generated in the groove by the arc welding; a detection unit configured to detect the position of the distal end of the molten pool in a camera image captured by the camera; and a decider configured to, when the distance between the arc and the distal end of the molten pool is in a predetermined range, decide an amount of correction on a welding speed based on the distance.

### Citation List

### Patent Literature

PTL 1: Japanese Unexamined Patent Application Publication No. 2021-79444

### Summary of Invention

### Technical Problem

Disturbance may be present in various production sites not only in the applications of the field of welding disclosed in PTL 1. The disturbance in welding includes, for example, misalignment of the work, decrease in gas flow rate, magnetic arc blow, instability of wire feeding, instability of current supply, oil adhesion to the work, rust of the work (hereinafter also referred to as an oxide film), and sputter adhesion to the work. As described above, the image recognition technique extracts feature points from image data, and an example of welding in which the occurrence of disturbance is significant is such that due to adhesion of an oxide film or spatter to the work, a situation occurs where a subject or part of a subject is hidden, and a feature point is unrecognizable or a feature point changes suddenly.

When disturbance, such as decrease in gas flow rate, magnetic arc blow occurs, the arc becomes unstable, a molten pool swings, and a situation where a feature point changes suddenly occurs. Like this, when a feature point itself is unrecognizable due to the disturbance, or when a feature point is misrecognized due to a sudden change of a subject, identification of the image data based on the feature point may be adversely affected. Specifically, when image data is attempted to be identified without recognizing that a feature point in the image data is unrecognizable, or misrecognized, this affects the processing step in the later stage. Note that in PTL 1, no consideration is taken regarding such effects of disturbance. Therefore, with the method of PTL 1, identification of the image data is adversely affected due to the disturbance, and as a result, the amount of correction on the welding speed is affected, and automation may become difficult.

Thus, an abnormality determination technique and a processing technique are called for, the abnormality determination technique being capable of determining that a feature point in the image data is unrecognizable, or misrecognized even with the occurrence of disturbance, the processing technique having no adverse effect on identification of the image data regardless of a determined abnormality.

Thus, it is an object of the present invention to provide an abnormality determination method capable of determining an abnormality of a feature point in image data even under an environment where disturbance occurs. Furthermore, it is an object to provide a processing method at time of abnormality, having no adverse effect on identification of image data regardless of an abnormality determined by the abnormality determination method. In addition, it is an object to provide a control device, a welding system and a program that are capable of performing the abnormality determination method.

### Solution to Problem

In order to solve the above-mentioned problem, the present invention has the following configuration. Specifically, an abnormality determination method for determining an abnormality in information about one or a plurality of feature points extracted from image data, the abnormality determination method comprising:
a calculating step for calculating geometric quantity data derived from the information about the one or plurality of feature points;
an abnormality detection step for detecting abnormality for time-series data composed of the geometric quantity data by using one or a plurality of abnormality detection means that are predetermined in correspondence to an abnormality reason; and
a determining step for determining an occurrence of an abnormality in the time-series data based on a detection result by the one or plurality of abnormality detection means.

In addition, the present invention according to another aspect has the following configuration. Specifically, a processing method for performing a process at time of abnormality in accordance with a determination result obtained by the abnormality determination method for determining an abnormality in information about one or a plurality of feature points extracted from image data.

For data of the time-series data in a period when an abnormality has occurred, the processing method includes a processing step for performing one of removal of the data in the period, correction of the data using a predetermined value, or correction of the data with a value immediately preceding the occurrence of the abnormality.

The abnormality determination method includes:
a calculating step for calculating geometric quantity data derived from the information about the one or plurality of feature points;
an abnormality detection step for detecting abnormality for time-series data composed of the geometric quantity data by using one or a plurality of abnormality detection means that are predetermined in correspondence to an abnormality reason; and
a determining step for determining an occurrence of an abnormality in the time-series data based on a detection result by the one or plurality of abnormality detection means.

In addition, the present invention according to another aspect has the following configuration. Specifically, a processing method for performing a process at time of abnormality in accordance with a determination result obtained by the abnormality determination method for determining an abnormality in information about one or a plurality of feature points extracted from image data, the processing method including:
an analysis step for analyzing a pattern of abnormality in the time-series data; and
a step for correcting a setting condition for alarm or an abnormality reason based on an analysis result in the analysis step.

The abnormality determination method includes:
a calculating step for calculating geometric quantity data derived from the information about the one or plurality of feature points;
an abnormality detection step for detecting abnormality for time-series data composed of the geometric quantity data by using one or a plurality of abnormality detection means that are predetermined in correspondence to an abnormality reason; and
a determining step for determining an occurrence of an abnormality in the time-series data based on a detection result by the one or plurality of abnormality detection means.

In addition, the present invention according to another aspect has the following configuration. Specifically, an information processing apparatus for determining an abnormality in information about one or a plurality of feature points extracted from image data, the information processing apparatus including:
a calculating unit configured to calculate geometric quantity data derived from the information about the one or plurality of feature points;
an abnormality detection unit configured to detect an abnormality for time-series data composed of the geometric quantity data using one or a plurality of abnormality detection means that are predetermined in correspondence to an abnormality reason; and
a determining unit configured to determine an occurrence of an abnormality in the time-series data based on a detection result by the one or plurality of abnormality detection means.

In addition, the present invention according to another aspect has the following configuration. Specifically, a welding system comprising an information processing apparatus for determining an abnormality in information about one or a plurality of feature points extracted from image data.

The information processing apparatus includes:
a calculating unit configured to calculate geometric quantity data derived from the information about the one or plurality of feature points;
an abnormality detection unit configured to detect an abnormality for time-series data composed of the geometric quantity data using one or a plurality of abnormality detection means that are predetermined in correspondence to an abnormality reason; and
a determining unit configured to determine an occurrence of an abnormality in the time-series data based on a detection result by the one or plurality of abnormality detection means.

In addition, the present invention according to another aspect has the following configuration. Specifically, a program causing a computer to execute a process comprising:
a calculating step for calculating geometric quantity data derived from information about one or a plurality of feature points extracted from image data;
an abnormality detection step for detecting abnormality for time-series data composed of the geometric quantity data by using one or a plurality of abnormality detection means that are predetermined in correspondence to an abnormality reason; and
a determining step for determining an occurrence of an abnormality in the time-series data based on a detection result by the one or plurality of abnormality detection means.

### Advantageous Effects of Invention

According to the present invention, an abnormality of a feature point in image data can be determined even under an environment where disturbance occurs. Furthermore, it is possible to perform processing based on the determined abnormality so that identification of image data is not affected.

### Brief Description of Drawings

[Fig. 1] Fig. 1 is a schematic view illustrating an example of a system configuration according to an embodiment of the present invention.
[Fig. 2] Fig. 2 is a perspective view illustrating the arrangement of a visual sensor according to the embodiment of the present invention.
[Fig. 3] Fig. 3 is an exemplary view illustrating an example of image data obtained by the visual sensor according to the embodiment of the present invention.
[Fig. 4] Fig. 4 is a block diagram illustrating a configuration example of a robot control device according to the embodiment of the present invention.
[Fig. 5] Fig. 5 is a block diagram illustrating a configuration example of a data processing device according to the embodiment of the present invention.
[Fig. 6] Fig. 6 is a conceptual diagram illustrating a learning process according to the embodiment of the present invention.
[Fig. 7] Fig. 7 is a schematic view illustrating an example of a screen used for a teaching work according to the embodiment of the present invention.
[Fig. 8] Fig. 8 is a schematic view illustrating an example of a screen used for a teaching work according to the embodiment of the present invention.
[Fig. 9] Fig. 9 is an exemplary view illustrating an analysis result of a welding image according to the embodiment of the present invention.
[Fig. 10] Fig. 10 is an exemplary view illustrating an analysis result of a welding image according to the embodiment of the present invention.
[Fig. 11] Fig. 11 is an exemplary view illustrating an analysis result of a welding image according to the embodiment of the present invention.
[Fig. 12] Fig. 12 is a flowchart for an abnormality determination process according to the embodiment of the present invention.
[Fig. 13] Fig. 13 is a graph illustrating an example of time-series data according to the embodiment of the present invention.
[Fig. 14] Fig. 14 is a graph illustrating an example of a determination result according to the embodiment of the present invention.
[Fig. 15] Fig. 15 is a graph illustrating an example of a determination result according to the embodiment of the present invention.
[Fig. 16] Fig. 16 is a sequence diagram for a robot control process according to the embodiment of the present invention.

### Description of Embodiments

Hereinafter, an embodiment for carrying out the present invention will be described with reference to the drawings and the like. Note that the embodiment described below is an embodiment illustrating the present invention, and is not intended to be construed to limit the present invention. All the components described in each embodiment are not necessarily required components to solve the technical problem of the present invention.

Note that the present invention is most effective in the field of welding in which many disturbance factors are involved and the effect of disturbance is significant, thus a description will be given for welding application in this embodiment, but the field to which the present invention is applied is not particularly limited. For example, the cutting field and the additive manufacturing field may be mentioned as targets. In this embodiment, an example of a 6-axis robot system is illustrated, but the number of axes of the robot is not particularly limited, for example, the present invention is applicable to the case of a portable welding robot, a welding device having a driver such as a carriage, or semi-automatic welding. In the drawings, the same components are labeled with the same reference number to indicate a correspondence relationship.

As described below, in this embodiment, a feature point of any object is extracted from image data using a learning device. In the description below related to the learning device, the "learning" or "machine learning" refers to generating a "learned model" by conducting learning using learning data and any learning algorithm. The learned model is updated in a timely manner as the learning progresses using a plurality of pieces of learning data, and even with the same input, the output will vary. Therefore, the learned model is not limited to the state at a specific time. Herein, a model used for learning is referred to as a "learning model", and a learning model that has undergone a certain amount of learning is referred to as a "learned model". A specific example of "learning data" will be described later, and the configuration thereof may be changed depending on the learning algorithm used. In addition, the learning data may include teaching data used for the learning itself, validation data used for validating a learned model, and test data used for testing a learned model. In the following description, when data related to learning is comprehensively shown, the data is referred to as the "learning data", and when data at the time of conducting learning itself is shown, the data is referred to as the "teaching data". Note that it is not intended to clearly classify the learning data into the teaching data, validation data, and test data, and for example, all learning data may be teaching data depending on learning, verification, and testing methods.

### [Configuration of Welding System]

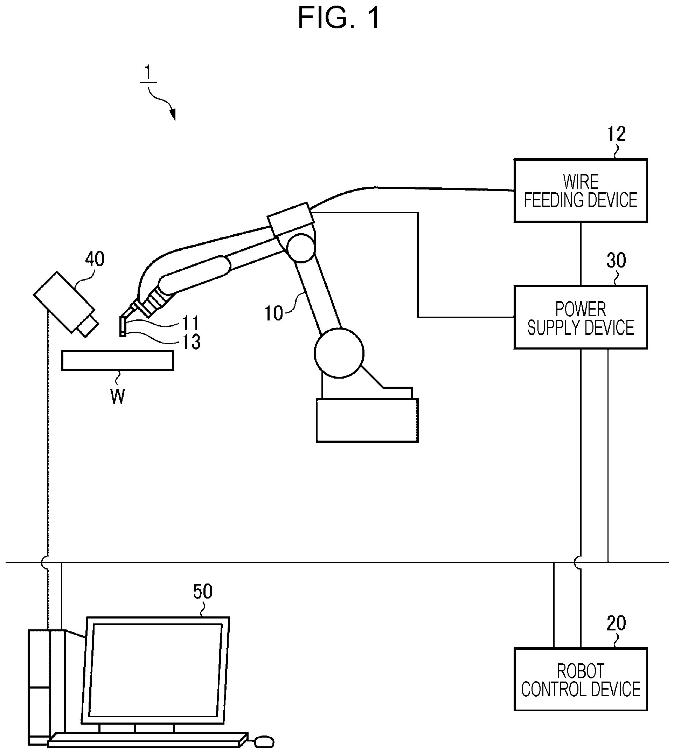

Fig. 1 is a configuration example of a welding system 1 according to this embodiment. The welding system 1 illustrated in Fig. 1 includes a welding robot 10, a robot control device 20, a power supply device 30, a visual sensor 40, and a data processing device 50. Note that as mentioned above, when the features according to the present invention are applied to a portable welding robot, a welding device having a drive unit such as a carriage, or semi-automatic welding, further components may be included according to their configurations.

The welding robot 10 illustrated in Fig. 1 is composed of a 6-axis articulated robot, and a welding torch 11 for GMAW is mounted on the distal end. Note that GMAW includes e.g., MIG (Metal Inert Gas) welding and MAG (Metal Active Gas) welding, and in this embodiment, a description is given using MAG welding as an example. The welding robot 10 is not limited to the 6-axis articulated robot, and for example, a portable welding robot may be adopted. Note that as a portable small robot, an orthogonal robot with 3 or less axes may be mentioned.

A welding wire 13 is supplied from a wire feeding device 12 to a welding torch 11. The welding wire 13 is delivered from the distal end of the welding torch 11 to a welding point. The power supply device 30 supplies electric power to the welding wire 13. The electric power causes an arc voltage to be applied across the welding wire 13 and work W to generate an arc. In this embodiment, the case of one-side welding is assumed, and the work W is such that steel plates are butted together, and a backing member is disposed on the back side, that is, on the surface opposite to the welding surface. The power supply device 30 is provided with a current sensor (not illustrated) to detect a weld current which flows from the welding wire 13 to the work W during welding, and a voltage sensor (not illustrated) to detect an arc voltage across the welding wire 13 and the work W.

The power supply device 30 has a processing unit and a storage unit which are not illustrated. The processing unit is comprised of e.g., CPU (Central Processing Unit). The storage unit is comprised of volatile and non-volatile memories, such as an HDD (Hard Disk Drive), a ROM (Read Only Memory), and a RAM (Random Access Memory). The processing unit executes a computer program for power supply control stored in the storage unit, thereby controlling the electric power to be applied to the welding wire 13. The power supply device 30 is also connected to the wire feeding device 12, and the processing unit controls the feed speed and the feed amount of the welding wire 13. The composition and type of the welding wire 13 are properly used depending on the welding target.

The visual sensor 40 is comprised of e.g., CCD (Charge Coupled Device) camera. The arrangement position of the visual sensor 40 is not particularly limited, and the visual sensor 40 may be directly mounted on the welding robot 10, or may be fixed to a particular location in the periphery as a monitoring camera. When the visual sensor 40 is directly mounted on the welding robot 10, the visual sensor 40 is moved to capture the periphery of the distal end of the welding torch 11 in coordination with the operation of the welding robot 10. The number of cameras included in the visual sensor 40 may be plural. For example, the visual sensor 40 may be formed using a plurality of cameras which are different in function and installation position.

In addition, the direction of image capturing by the visual sensor 40 is not particularly limited. For example, when the welding travel direction is forward, the visual sensor 40 may be disposed to capture an image on the forward side, or disposed to capture an image on the lateral surface side or the rear side. Therefore, the image capture range of the visual sensor 40 may be determined as appropriate. Note that in order to reduce the interference of the welding torch 11, it is preferable to capture an image from the forward side, and in this embodiment, an image is captured from the forward side. A captured image is transmitted to the data processing device 50, and utilized by the data processing device 50. At this point, the data processing device 50 may capture any image from the captured images e.g., at predetermined intervals, and may utilize the image for the later-described process. The capturing method and the capturing settings may be changed depending on, for example, the configuration and the function of the visual sensor 40, and the performance of the data processing device 50.

In this embodiment, the visual sensor 40 directly mounted on and fixed to the welding robot 10 is used. Then, a video image is captured as the welding image so that an image capture range includes at least, the work W, the welding wire 13, and the arc as the objects (targets) included in the image data. Note that various image capture settings related to the welding image may be pre-defined, or may be changed depending on the operation conditions of the welding system 1. As the image capture settings, e.g., frame rate, the number of pixels of image, resolution, and shutter speed may be mentioned.

The components included in the welding system 1 are communicably connected by various wired/wireless communication methods. The communication methods herein are not limit to one type of method, and the components may be connected by a combination of a plurality of communication methods.

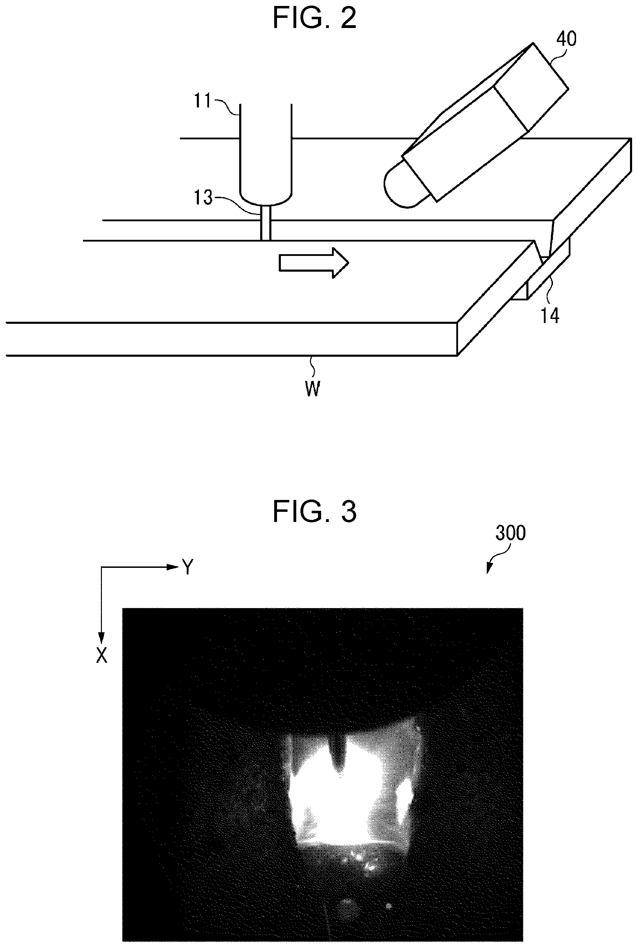

Fig. 2 is a perspective view illustrating the arrangement position of the visual sensor 40. In this embodiment, the work W is a butt joint. The work W consists of two metal plates, and are butted to each other with an interval of groove. Note that a backing member 14 made of ceramic is attached to the rear surface side of the two metal plates butted to each other. Note that a metal-based backing member may be used for the rear surface side, or no backing member may be used. Therefore, the material for the backing member is not particularly limited, and may vary depending on the material of the work W. In a butt joint, arc welding is performed in one direction along the groove. Hereinafter, the welding travel direction is referred to as the "welding direction". In Fig. 2, the welding travel direction is indicated by an arrow. Thus, the welding torch 11 is located rearward of the visual sensor 40.

The work W in this embodiment is installed horizontally so that the surface on which welding is performed faces vertically upward. Thus, the welding robot 10 welds the work W from the upper side of the work W. As illustrated in Fig. 2, the visual sensor 40 may be set diagonally upward with respect to the welding position of the work W. Note that Fig. 2 illustrates an example of flat position welding as a welding orientation, but is not limited thereto. For example, in the case of another orientation such as horizontal welding, the orientation and the position of the work W and the welding torch 11 are changed as needed.

Fig. 3 illustrates an example of image data captured by the visual sensor 40. In the two-dimensional coordinates shown in Fig. 3, the X-axis indicates the welding direction, and the Y-axis indicates a direction perpendicular to the X-axis. As illustrated in Fig. 3, the image capture range of the visual sensor 40 includes the welding position of the work W, and an image of the welding position during arc welding is captured. The image data includes a molten pool, the welding wire 13, and the arc. The visual sensor 40 in this embodiment can continuously capture a still image of 1024×768 pixels, for example. In other words, the visual sensor 40 can capture welding images as a video image. The resolution of a still image that can be captured by the visual sensor 40 is not particularly limited. For example, when the visual sensor 40 comprises a plurality of cameras, each of the plurality of cameras may obtain a welding image with a different resolution. Also, before a welding image is input to the later-described learned model, pre-processing may be performed such as clipping any feature region from the captured welding image for the purpose of reducing the processing time. Any feature region may be a fixed size range arranged so that a predetermined region is located at the center. The size of any feature region may be changed according to the welding situation.

### [Configuration of Robot Control Device]

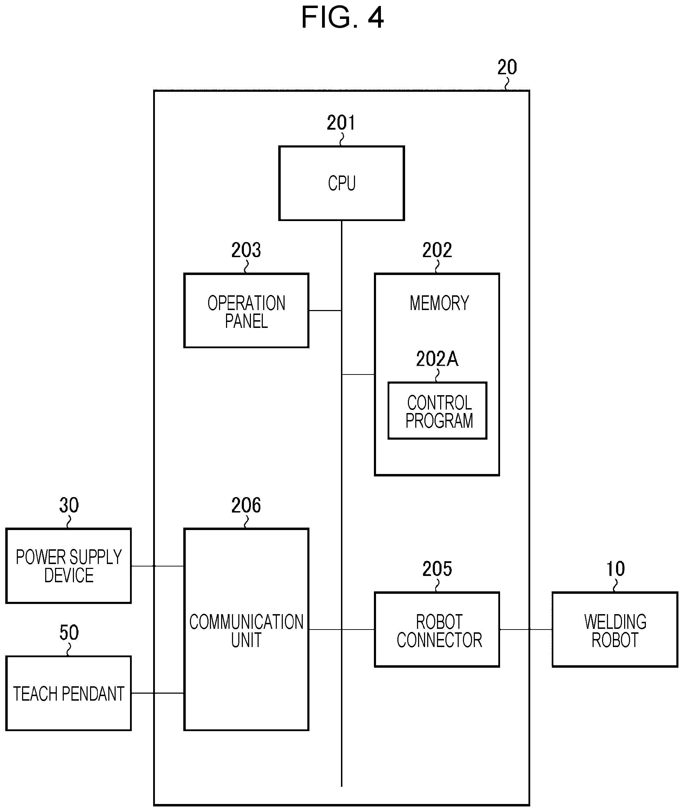

Fig. 4 illustrates a configuration example of the robot control device 20 that controls the operation of the welding robot 10. The robot control device 20 includes a CPU 201 that controls the entire apparatus, a memory 202 that stores data, an operation panel 203 including a plurality of switches, a teach pendant 204 used for teaching work, the robot connector 205, and the communication unit 206. The memory 202 is comprised of volatile and non-volatile storage devices, such as a ROM, a RAM, an HDD. A control program 202A used for the control of the welding robot 10 is stored in the memory 202. The CPU 201 executes the control program 202A, thereby controlling various operations of the welding robot 10.

For input of instructions to the robot control device 20, the operation panel 203 and the teach pendant 204 can be used, and the teach pendant 204 is mainly utilized. The teach pendant 204 is coupled to the robot control device 20 body via the communication unit 206. An operator can input a teaching program using the teach pendant 204. The robot control device 20 controls the welding robot 10 in accordance with the teaching program input by the teach pendant 204. Note that, the teaching program can be automatically generated based on CAD (Computer-Aided Design) information using, for example, a computer which is not illustrated. The operation content defined by the teaching program is not particularly limited, and may vary depending on the specifications and the welding method of the welding robot 10.

The robot connector 205 is connected to the drive circuit of the welding robot 10. The CPU 201 outputs a control signal based on the control program 202A to the drive circuit (not illustrated) provided in the welding robot 10 via the robot connector 205. The communication unit 206 includes a communication module for wired or wireless communication. The communication unit 206 is used for communication of data and signals with the power supply device 30, the data processing device 50, and the teach pendant 204. The communication system and standards used by the communication unit 206 are not particularly limited, a plurality of systems may be combined, or the communication system and standards may vary depending on the device connected. From the power supply device 30, for example, the current value of a weld current detected by a current sensor which is not illustrated, and the voltage value of an arc voltage detected by a voltage sensor which is not illustrated are given to the CPU 201 via the communication unit 206.

The robot control device 20 also controls the travel speed and the protruding direction of the welding torch 11 by the control of each axis of the welding robot 10. When performing a weaving operation, the robot control device 20 also controls the weaving operation of the welding robot 10 according to the set period, amplitude, and welding speed. The weaving operation refers to swinging the welding torch 11 alternately in a direction intersecting the welding travel direction, that is, the welding direction. The robot control device 20 performs weld line profile control along with the weaving operation. The weld line profile control is an operation to control the position on the right and left with respect to the travel direction of the welding torch 11 so that bead is formed along a weld line. In addition, the robot control device 20 controls the wire feeding device 12 via the power supply device 30, thereby also controlling the feed speed of the welding wire 13.

### [Configuration of Data Processing Device]

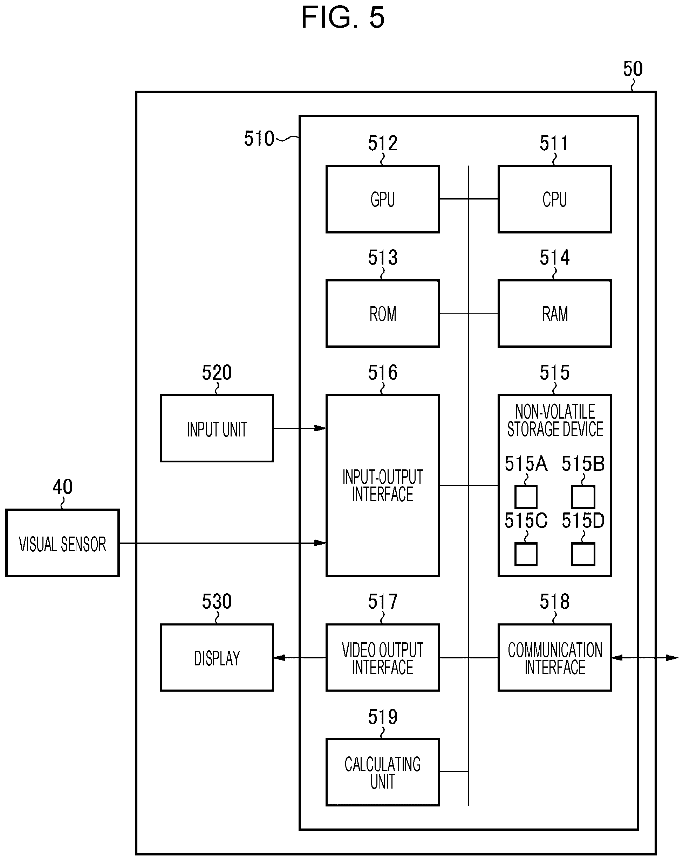

Fig. 5 is an explanatory diagram illustrating a configuration example of the data processing device 50. The data processing device 50 is comprised of a computer, for example. The computer includes a body 510, an input unit 520, and a display 530. The body 510 includes a CPU 511, a GPU (Graphical Processing Unit) 512, a ROM 513, a RAM 514, a non-volatile storage device 515, an input-output interface 516, a video output interface 517, a communication interface 518, and a calculating unit 519. The CPU 511, the GPU 512, the ROM 513, the RAM 514, the non-volatile storage device 515, the input-output interface 516, the video output interface 517, the communication interface 518, and the calculating unit 519 are communicably connected to each other via a bus or a signal line.

In the non-volatile storage device 515, a learning program 515A that performs deep learning using predetermined learning data, a learned model 515B generated through execution of the learning program 515 A, information generation program 515C to generate welding information about welding using the learned model 515B, and an image data 515D are stored. In addition, an operating system and application programs are also installed in the non-volatile storage device 515.

The data processing device 50 implements various functions through execution of programs by the CPU 511 and the GPU 512. In this embodiment, the data processing device 50 implements a function of generating a learned model by machine learning, and a function of performing various processes at the time of actual welding by utilizing the learned model. The details of these functions will be described below. Note that the data processing device 50 may be divided according to the function of generating a learned model, and the function of performing control processes based on the information output from the learned model at the time of actual welding. From the viewpoint of versatility, the data processing device 50 is preferably divided into a plurality of devices according to its functions. The GPU 512 is used as an arithmetic device when the learning program 515A and the information generation program 515C are executed. The ROM 513 stores BIOS (Basic Input Output System) and the like to be executed by the CPU 511. The RAM 514 is used as a work area for a program read from the non-volatile storage device 515.

The input-output interface 516 is connected to the input unit 520 that includes a keyboard, a mouse and the like. The visual sensor 40 is also connected to the input-output interface 516. The image data output from the visual sensor 40 is provided to the CPU 511 and the GPU 512 via the input-output interface 516. The communication interface 518 is a communication module for wired or wireless communication. The video output interface 517 is connected to the display 530 comprised of e.g., a liquid crystal display or an organic EL (Electro-Luminescence) display, and a video signal corresponding to image data provided from the CPU 511 is output to the display 530. The calculating unit 519 cooperates with the CPU 511 and the GPU 512 to perform various processes, such as calculation of geometric quantity data and abnormality determination process according to this embodiment. The details of the processing of the calculating unit 519 will be described below.

### [Generation of Learning Model]

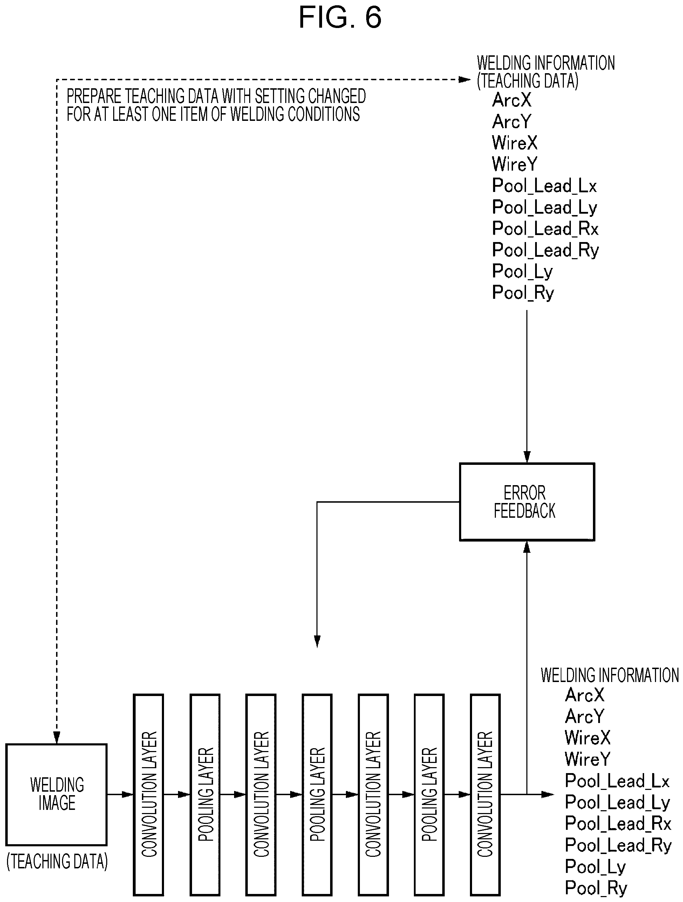

Hereinafter, the feature points extracted from image data and the learned model that extracts feature points in this embodiment will be described. Fig. 6 is a diagram for conceptually explaining the learned model 515B generation process by a learning process. The learned model 515B in this embodiment is formed by a convolution neural network, and includes a plurality of convolution layers and a plurality of pooling layers. Note that the configuration of the convolution neural network is not limited to what is described above, and the number of layers and the configuration may be different from what is described above.

The learned model 515B receives input of image data output from the visual sensor 40, and outputs feature points related to various pieces of welding information which appears in the image data. In this embodiment, as illustrated in Fig. 3, the image data input to the learned model 515B includes at least a molten pool, the welding wire 13 (see Fig. 1) and the arc as the objects (targets), and feature points obtained from these objects, or between a plurality of objects are extracted. Then, welding information such as arc stability, the amount of weld deposition, arc tracking situation or a weld penetration degree can be obtained in real time based on the extracted feature points. Note that the image data may be referred to as the welding image below.

In this embodiment, as the feature points related to welding information, the distal end (wire distal end) of the welding wire 13, the center point (arc center) of the arc, the positions of distal ends on the right and left (or upper and lower) of a molten pool, and the positions of right and left (or upper and lower) ends of a molten pool. Input of the feature points to be used as the teacher data is made by an operator designating specific positions on the welding image in accordance with the instructions on the operation screen that supports a teaching work. Therefore, the teacher data is formed by pairs of a welding image and coordinate information indicating the feature points designated by an operator. In the learning process, a feature point output from the learning model is compared with a feature point included in the teacher data, and the error between those is fed back to adjust parameters. Learning progresses by repeating this process.

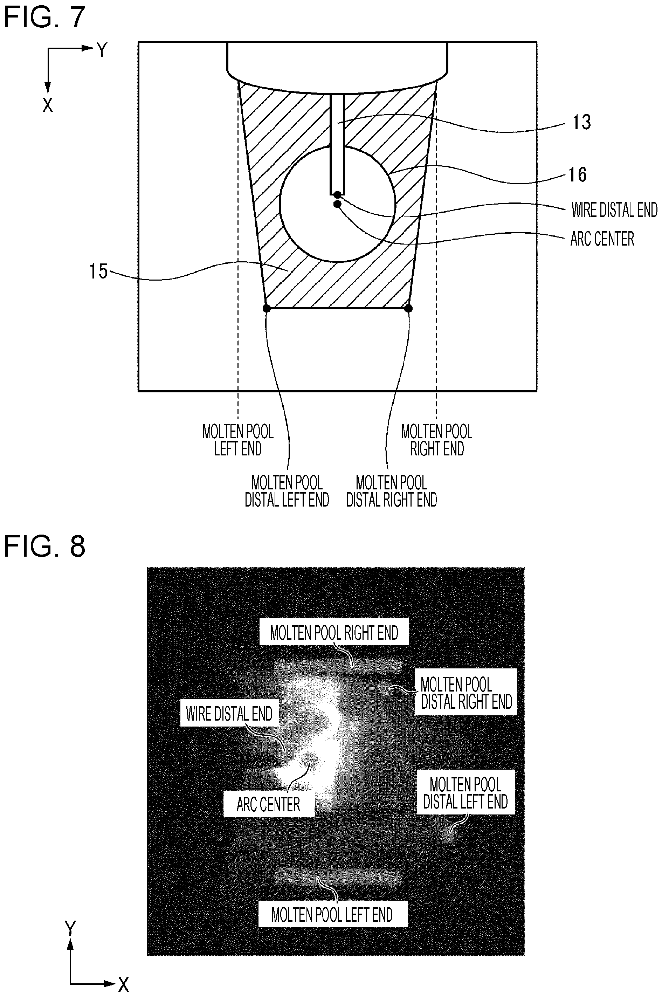

Fig. 7 is a view illustrating an example of a screen used for teaching work. The welding image illustrated in Fig. 7 includes a molten pool 15, a welding wire 13, and an arc 16. In Fig. 7, the molten pool 15 is shown by hatching.

Fig. 8 is an explanatory view illustrating a specific example of a welding image obtained by welding, and an example of welding information in the welding image. Herein, in order to facilitate explanation, the position corresponding to the coordinates indicated by a feature point is drawn on the welding image. Note that as described above, the image has coordinates, and forms a coordinate plane consisting of 2 axes: the X-axis and the Y-axis.

In this embodiment, the visual sensor 40 is installed so that the weld line direction and the X-axis direction are parallel, thus in this embodiment, the X-axis direction may be referred to as the weld line direction. The Y-axis direction is a perpendicular direction to the X-axis, in other words, the groove width direction which is perpendicular to the weld line, thus the Y-axis direction may be referred to as the groove width direction.

In the case of this embodiment, as the feature points, the coordinate position (ArcX, ArcY) of the arc center, the coordinate position (WireX, WireY) of the wire distal end, the coordinate position (Pool_Lead_Lx, Pool_Lead_Ly) of the molten pool distal left end, the coordinate position (Pool_Lead_Rx, Pool_Lead_Ry) of the molten pool distal right end, the coordinate position (Pool_Ly) of the molten pool left end, and the coordinate position (Pool_Ry) of the molten pool right end are taught by an operator. Input of a feature point is made by an operator designating a specific position on the screen. The coordinates which provide the boundary between the welding wire 13 and the arc are an example of position coordinates of the wire distal end. The molten pool distal left end, the molten pool distal right end, the molten pool left end, and the molten pool right end are an example of a feature point related to the behavior of the molten pool 15. For example, when the feature points of the molten pool left end and the molten pool right end are known, the width of the molten pool 15 can be calculated as a geometric quantity. Note that Fig. 7 illustrates an example of flat position welding as the welding orientation. Therefore, depending on the welding orientation and the direction of an image, the "left end" and the "right end" may be replaced by the "upper end" and the "lower end".

### [Time-series Data]

In this embodiment, the difference (hereinafter, referred to as the "LeadX") between either predetermined molten pool distal end position and the position of the wire distal end in the X-direction is calculated, and sampled at predetermined intervals. The difference (hereinafter, referred to as the "LeadW") between the molten pool distal left end and the molten pool distal right end in the Y-direction is calculated, and sampled at predetermined intervals. Note that the sampling data is also referred to as time-series data below. The number of samplings per unit time is not particularly limited, but in this embodiment, conforms to the frame rate of video. In this embodiment, a calculated value such as LeadX and LeadW included in the time-series data is also referred to as geometric quantity data.

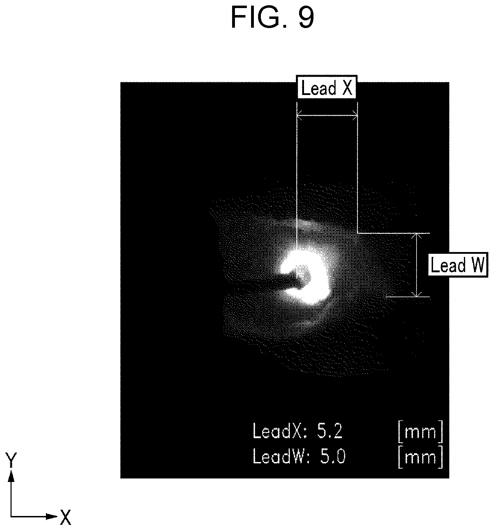

The analysis details will be specifically described based on the welding image of Fig. 9. Of the feature points related to welding information output from a learned model, the coordinate position (Pool_Lead_Lx, Pool_Lead_Ly) of the molten pool distal left end, the coordinate position (Pool_Lead_Rx, Pool_Lead_Ry) of the molten pool distal right end, and the coordinate position (WireX, WireY) of the wire distal end are used, and for LeadX, the molten pool distal end position is assumed to be on the right side. In this case, the calculating unit 519 calculates, as LeadX, the difference ("Pool_Lead_Rx" - "WireX") between the coordinate position of the molten pool distal right end and the coordinate position of the wire distal end in the X-axis direction. In addition, the calculating unit 519 calculates, as LeadW, the difference ("Pool_Lead_Ry" - "Pool_Lead_Ly") between the coordinate position of the molten pool distal left end and the coordinate position of the molten pool distal right end in the Y-axis direction. In this case, the distance to be calculated may be the number of pixels, or may be converted to any unit such as "mm" and "cm". The example of Fig. 9 shows an instance in which LeadX is detected as 5.2 [mm], and LeadW is detected as 5.0 [mm].

The LeadX and LeadW being such geometric quantity data are organized along the time-series, thereby making it possible to determine the degree of normality of welding, and as described below, when the welding is determined to be unsteady, automatic control is performed so that the welding speed is corrected, and a steady state is resumed.

Note that in this embodiment, LeadX and LeadW are calculated as an example of geometric quantity data, and the degree of normality of welding is determined from the time-series data, but the geometric quantity data is not limited to these. For example, the geometric quantity data included in the time-series data may be (1) the coordinate positions of a single or a plurality of feature points, (2) the distance between any plurality of feature points, or (3) the area formed by any plurality of feature points which are obtained from a single object. The geometric quantity data included in the time-series data may be (4) the distance between feature points of objects, obtained from different objects.

The case of (1) the coordinate positions of a single or a plurality of feature points will be described more specifically. When the single object is an arc, the geometric quantity data of ArcX as the coordinate position on the X-axis of the arc center and ArcY as the coordinate position on the Y-axis of the arc center are calculated, and the stability of the arc can be determined from the time-series data. (2) the distance between any plurality of feature points includes, as geometry quantity data, the above-mentioned LeadW obtained from the object as the molten pool. In the case of (3) the area formed by any plurality of feature points, for example, the area of the molten pool can be geometric quantity data, and using this, the amount of deposition can be evaluated. (4) the distance between feature points of objects includes geometric quantity data, such as the above-mentioned LeadX obtained from different objects, the welding wire and the molten pool, the difference between the wire distal end position and the molten pool center position, and the distance between the groove and the molten pool distal end. The time-series data composed of the geometric quantity data consisting of the distance between the wire distal end position and the molten pool center position is applicable to weld line profile, and the time-series data composed of the geometric quantity data consisting of the distance between the groove and the molten pool distal end is applicable to determination of weld penetration.

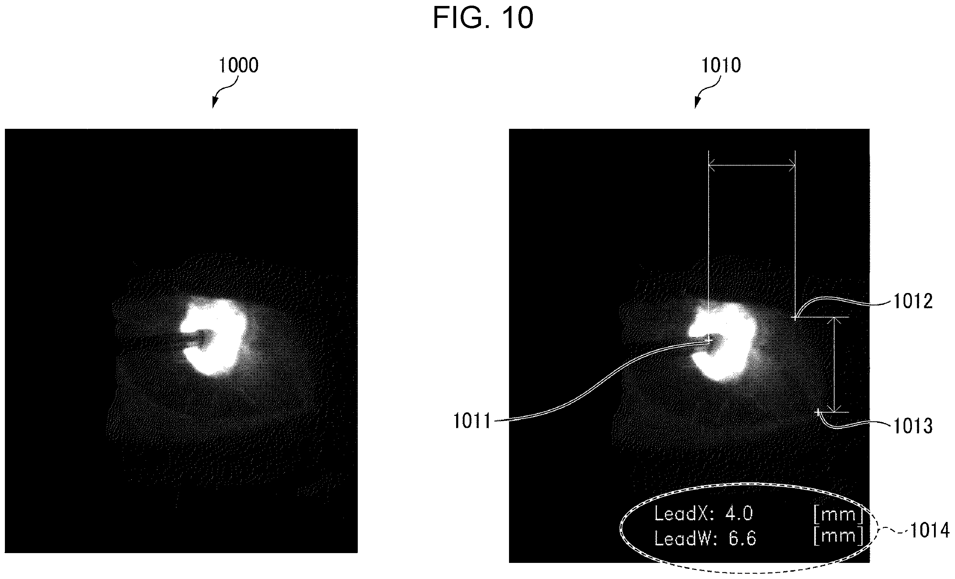

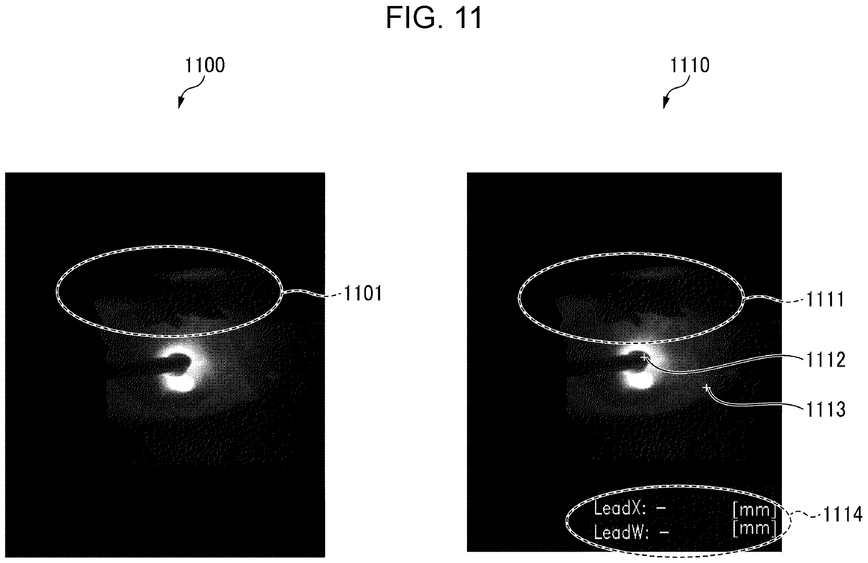

Fig. 10 and Fig. 11 are views illustrating an analysis result of a welding image according to this embodiment. Fig. 10 illustrates an example in which there is no abnormality, and Fig. 11 illustrates an example in which there is an abnormality. In Fig. 10, an image 1000 indicates the image of the periphery of a molten pool. An image 1010 indicates a result of calculation process for geometric quantity data. As a result of performing the above-mentioned process in the image 1010, a feature point 1011 representing the distal end of the welding torch 11, a feature point 1012 representing the distal upper end of the molten pool, and a feature point 1013 representing the distal lower end of the molten pool are identified. The LeadX and LeadW are derived based on these feature points. A parameter 1014 indicates the values of calculated LeadX and LeadW, and here, LeadX = 4.0 [mm], LeadW = 6.6 [mm] are calculated.

In Fig. 11, an image 1100 indicates the image of the periphery of the molten pool. Herein, the image 1100 includes an object 1101 corresponding to an oxide film (corresponding to rust of the work). An image 1110 indicates a result of calculation process for geometric quantity data. As a result of performing the above-mentioned process in the image 1110, a feature point 1112 representing the distal end of the welding torch 11, and a feature point 1113 representing the distal lower end of the molten pool are identified. However, due to an object 1111 corresponding to an oxide film, a feature point corresponding to the distal upper end of the molten pool has not been detected. Therefore, the LeadX and the LeadW have not been derived. Thus, a parameter 1114 does not display the values of LeadX and LeadW. In such a case, it is treated that some abnormality has occurred.

### [Abnormality Determination Method and Processing Method at Time of Abnormality]

In an example of welding, disturbance factors include misalignment of the work, decrease in gas flow rate, magnetic arc blow, instability of wire feeding, instability of current supply, oil adhesion to the work, an oxide film, and sputter adhesion to the work. For example, due to adhesion of an oxide film or spatter to the work, as illustrated in Fig. 11, a situation occurs where a subject or part of a subject is hidden, and a feature point is unrecognizable or a feature point changes suddenly. Therefore, the geometric quantity data calculated based on the feature points under such a situation may be defective. When such data is used, as a result, the entire automatic control may be adversely affected.

In this embodiment, geometric quantity data is calculated, abnormality determination is made based on the time-series data composed of the geometric quantity data, and a portion corresponding an abnormality in the time-series data is identified. The welding conditions are then corrected based on the time-series data excluding the portion determined to have an abnormality, thereby implementing automatic control resistant to disturbance. Hereinafter, an abnormality determination method according to this embodiment will be described in detail.

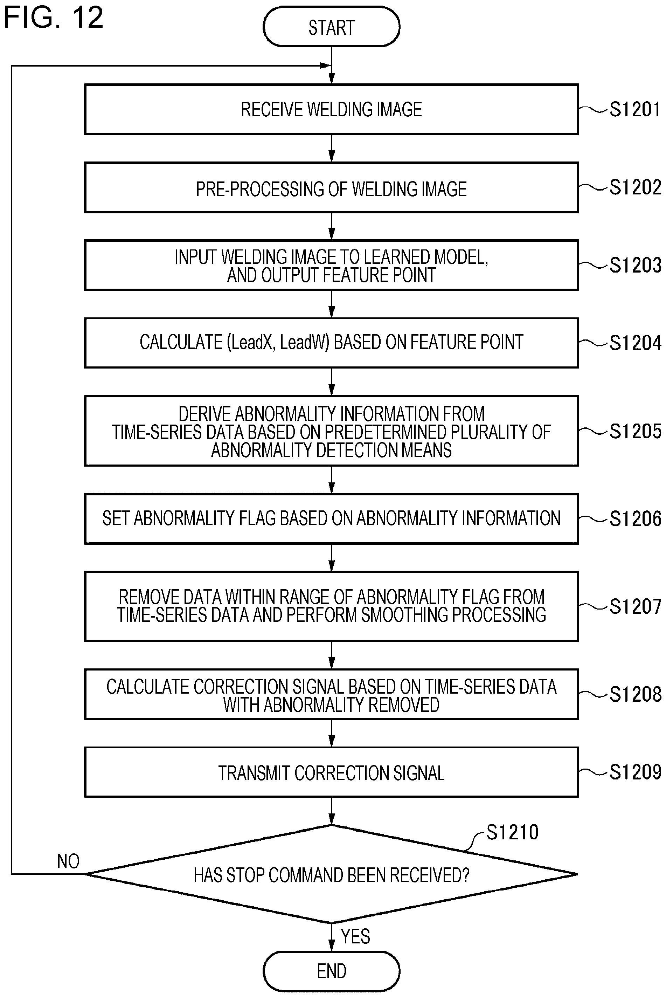

The abnormality determination method will be described using Fig. 12. Fig. 12 is a flowchart in which a feature point is extracted from a welding image by the learned model 515B, an abnormality determination is made, and a correction signal to perform automatic control is output in consideration of abnormality details.

The process below is implemented by the processing units of the data processing device 50 reading and executing various programs stored in the non-volatile storage device 515. The process flow starts at the same time as the start of welding, and along with this, the image capturing by the visual sensor 40 also starts.

In S1201, while automatic welding is performed, the data processing device 50 receives, from the visual sensor 40, a welding image which has captured a welding position.

In S1202, the data processing device 50 performs image processing as pre-processing for the welding image received in S1201. The image processing includes, for example, image reduction, and conversion to a grayscale image. Note that another process may be further performed, or part of the process may be omitted depending on the process load or the like.

In S1203, the data processing device 50 inputs the welding image pre-processed in S1202 to the above-mentioned learned model, and acquires feature points as the welding information outputted as the result of the input. In this embodiment, the coordinate position (ArcX, ArcY) of the arc center, the coordinate position (WireX, WireY) of the wire distal end, the coordinate position (Pool_Lead_Lx, Pool_Lead_Ly) of the molten pool distal left end, the coordinate position (Pool_Lead_Rx, Pool_Lead_Ry) of the molten pool distal right end, the coordinate position (Pool_Ly) of the molten pool left end, and the coordinate position (Pool_Ry) of the molten pool right end may be output.

In S1204, the data processing device 50 calculates geometric quantity data based on the feature points output by the learned model. In this embodiment, the geometric quantity data of "LeadX" and the geometric quantity data of "LeadW" are used, the "LeadX" being calculated as the difference ("Pool_Lead_Rx" - "WireX") between the coordinate position of the molten pool distal right end and the coordinate position of the wire distal end in the X-axis direction, the "LeadW" being calculated as the difference ("Pool_Lead_Ry" - "Pool_Lead_Ly") between the coordinate position of the molten pool distal left end and the coordinate position of the molten pool distal right end in the Y-axis direction.

In S1205, the data processing device 50 performs abnormality detection using the time-series data composed of the geometric quantity data "LeadX", and the time-series data composed of the geometric quantity data "LeadW". Note that the means to perform abnormality detection may be set in advance. The type of disturbance has a wide variety, and the reason for misrecognition of a feature point and an unrecognizable feature point varies. For this problem, the inventors identify plural reasons for the occurrence of an abnormality of a feature point in advance, and provide a plurality of detection means in correspondence to the reasons, then determine an abnormality using the plurality of detection means in correspondence to the reasons for the occurrence of an abnormality. Thus, the inventors have found that an abnormality of a feature point caused by any disturbance can be determined with high accuracy.

In this embodiment, as detection means for "abnormality reason for feature point misrecognition", (1) means to detect an abnormality when the rate of detection in a predetermined interval (time period) is less than or equal to a threshold value is used. As shown in Fig. 11, regarding the rate of detection herein, when geometric quantity data cannot be calculated upon input of a welding image, the welding image is counted as an undetected welding image. As the detection means for "abnormality reason for feature point misrecognition", (2) means to detect an abnormality when a feature point is out of a range defined by a predetermined outlier identification method, and (3) means to detect an abnormality when feature point positions between frames of adjacent pieces of image data are different (separated) by a predetermined threshold value or more are used. Note that a configuration may be adopted in which at least one of these means is used. (2) the predetermined outlier identification method is, for example, a method of detecting an abnormality when a feature point is out of the applicable range of 3σ method using a Hampel identifier. Note that the plurality of abnormality detection means described above are an example, and other means may be used. Therefore, the combination of the abnormality detection means is not limited to what has been described above. Note that from the viewpoint of the accuracy of abnormality determination, it is preferable that a plurality of detection means be used, and it is more preferable that two or more combinations from (1) to (3) detection means be used.

In S1206, the data processing device 50 sets an abnormality graph based on the abnormality information detected by each abnormality detection means in S1205. In this embodiment, for the interval determined to be abnormal by at least one of the plurality of abnormality detection means, the value of an abnormality flag is set ON, and an ON signal is output. When the abnormality flag is ON, it indicates that an abnormality has occurred in a welding image corresponding to this timing.

In S1207, the data processing device 50 performs a process of removing the data in an abnormality flag ON signal interval. Note that removal of the data in an abnormality interval is an example, and a supplement process may be performed to replace the data in the abnormality flag ON signal interval with a predetermined value or the median of a predetermined range. Alternatively, when a supplement process is performed, to be removed value may be supplemented with the value in an immediately preceding interval of the abnormality flag ON signal interval, or a supplementing value may be changed according to the length of the ON signal interval. Furthermore, in order to reduce fine noise in the data after the removal, the data processing device 50 performs a smoothing process by applying a smoothing filter such as a moving average filter. The accuracy of automatic control is further improved by performing the smoothing process. Note that the smoothing process may be omitted depending on the result of the data removal. The details of the filtering process using a predetermined filter are not particularly limited, and may vary depending on the details of the data removal process or supplement process.

In S1208, the data processing device 50 calculates a correction signal based on the time-series data for which the process of removing the data in the abnormality interval has been performed in S1207. The calculation method here is not particularly limited, and for example, a correction signal indicating the amount of correction related to a welding speed and a welding voltage may be calculated in accordance with a pre-defined rule.

In S1209, the data processing device 50 outputs, to the robot control device 20, the correction signal calculated based on the determination information for disturbance.

In S1210, the data processing device 50 determines whether a stop command has been received from the robot control device 20. The stop command here corresponds to a welding stop command transmitted from the robot control device 20. When a stop command has not been received (NO in S1210), the process of the data processing device 50 returns to S1201. Meanwhile, when a stop command has been received (YES in S1210), the process flow is completed.

The application of the abnormality flag is not limited to the data removal mentioned above. The pattern of the abnormality flag may be analyzed, for example, analysis such as prediction may be made for the abnormality reason or the type of disturbance based on the period, and frequency of ON signal or OFF signal of the abnormality flag. In addition, alarm (issuance of an error) may be performed based on the analysis result, and correction may be made on various setting conditions. For example, when the number of ON signals of the abnormality flag in a predetermined period exceeds a predetermined threshold value, it is determined that large sputters frequently occur, and alarm may be issued to stop welding. When it is determined that large sputters frequently occur, control such as achieving arc stability may be performed by making correction to increase the set value of the arc voltage.

### [Example of Abnormality Determination]

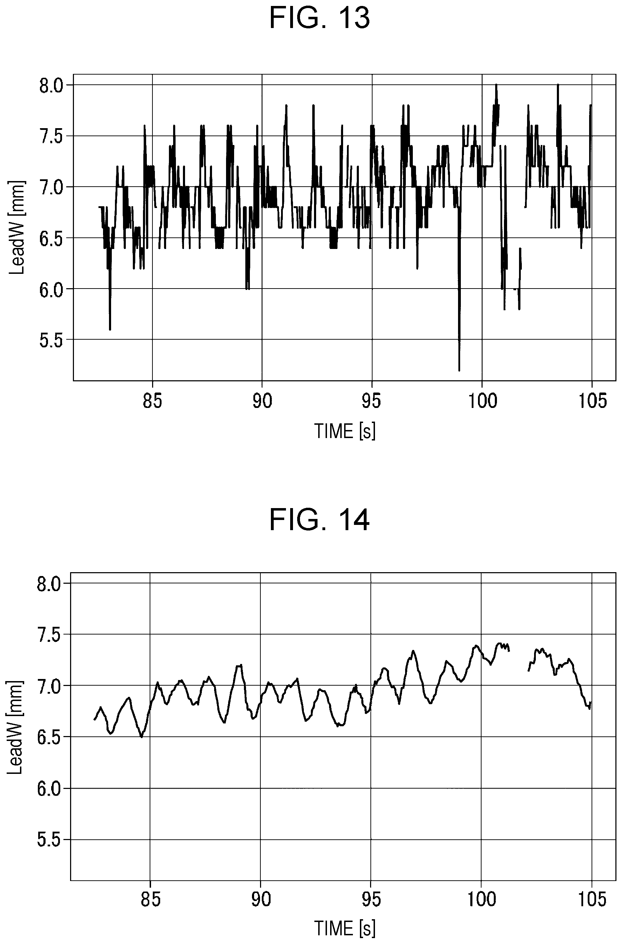

Hereinafter, a specific example of abnormality determination according to this embodiment will be described using Fig. 13 to Fig. 15.

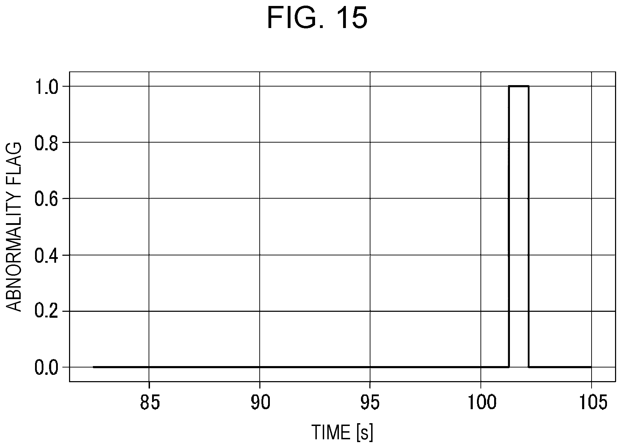

Fig. 13 illustrates the time-series data of the geometry quantity data LaedW which serves as input data in an abnormality determination process. Note that the time-series data at this time is in a raw data state where no editing has been performed. In Fig. 13, the horizontal axis indicates time [s], and the vertical axis indicates the value [mm] of LeadW. Fig. 14 illustrates the data after removing the data in the range determined to be abnormal as a result of the above-mentioned abnormality determination process. In Fig. 14, the horizontal axis indicates time [s], and the vertical axis indicates the value [mm] of LeadW. Fig. 15 illustrates the time-series data of the value of the abnormality flag in the above-mentioned abnormality determination process. In Fig. 15, the horizontal axis indicates time [s], and the vertical axis indicates the value (0 or 1) of the abnormality flag. The case where the value of the abnormality flag is 1 corresponds to the ON signal mentioned above. In Fig. 13 to Fig. 15, the time on the horizontal axes corresponds to each other.

According to Fig. 13 to Fig. 15, in the range where the value of the abnormality flag is 1 in Fig. 15, the value of the time-series data illustrated in Fig. 13 is removed, the data in the entire range is smoothed, and as a result, the time-series data as illustrated in Fig. 14 is obtained.

### [Welding Control Method]

Hereinafter, the welding operation of the welding system 1 at the time of actual welding will be described. When arc welding is performed, an operator starts each of the robot control device 20, the power supply device 30, and the data processing device 50. The robot control device 20 controls the movement of the welding robot 10 that performs welding. The data processing device 50 inputs a welding image captured by the visual sensor 40, and successively outputs a feature point related to the arc welding. In this embodiment, the welding information provides the position of the wire distal end, the arc center, the molten pool distal right end and distal left end positions, and the molten pool right end and left end positions.

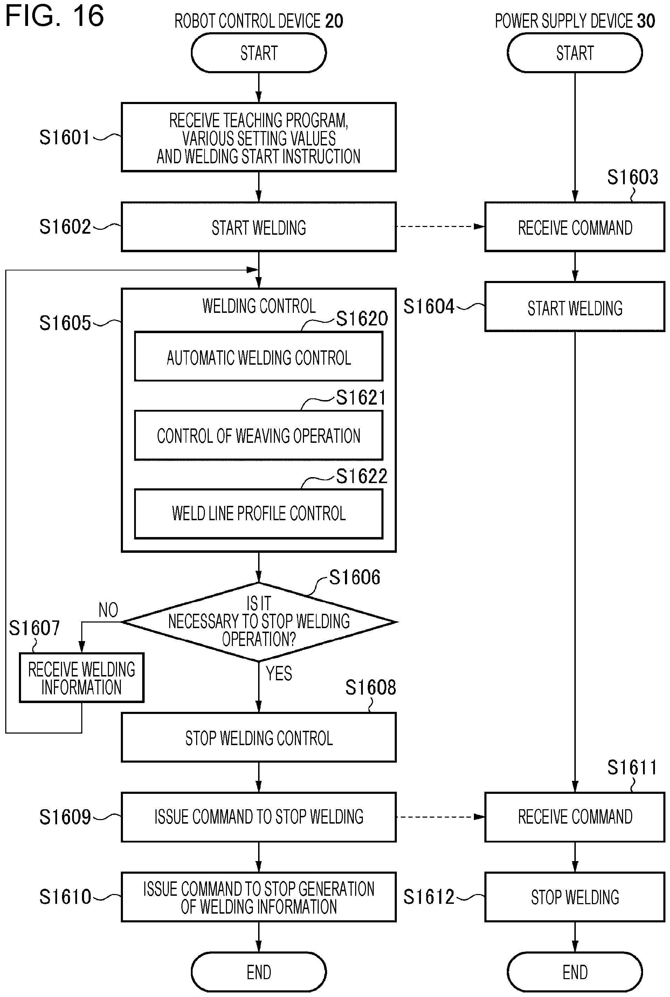

Fig. 16 is a flowchart illustrating the processing operation of the robot control device 20 and the power supply device 30. When starting arc welding, an operator operates the teach pendant 204 provided in the robot control device 20 to input the teaching program, and various set values to be applied to the robot control device 20. The teaching program here is defined as the trained program that has been trained for the movement of the welding robot 10 and instructions for welding start, welding end. In this embodiment, the process sequence of Fig. 16 and the process flow of Fig. 12 are performed concurrently.

In S1601, the robot control device 20 receives the teaching program, and various set value instructions.

In S1602, after the start of the teaching program, the robot control device 20 moves the robot to a predetermined welding start position, and commands the power supply device 30 to start welding (arc on). Note that before the start of a welding program, sensing may be performed to correct the set values for the teaching program.

In S1603, the power supply device 30 receives a command to start welding from the robot control device 20.

In S1604, the power supply device 30 starts welding by controlling a built-in power supply circuit (not illustrated) to provide electric power. Thus, a voltage is applied across the welding wire 13 (see Fig. 1) and the work W (see Fig. 1) to generate an arc at the welding start position.

In S1605, the robot control device 20 transmits a control signal to the power supply device 30 or the welding robot 10 to perform welding control. The welding control includes, for example, automatic welding control (S1620), control of the weaving operation (S1621), and weld line profile control (S1622). In the automatic welding control, the data processing device 50 transmits a correction signal to control at least one of welding speed, weld current or arc voltage to the welding robot 10 or the power supply device 30, while automatically moving the welding torch 11 in the welding direction, and the welding robot 10 or the power supply device 30 performs welding in accordance with the correction signal. Note that from the view point of easiness of the control, the automatic welding control preferably includes control of the welding speed, and in this embodiment, only the control of the welding speed is performed.

In S1606, the robot control device 20 determines whether it is necessary to stop welding. For example, the robot control device 20 receives instructions to stop welding from an operator, and when a welding end position is detected or a welding abnormality is detected by the teaching program, may determine that it is necessary to stop welding. When it is unnecessary to stop welding (NO in S1606), the process of the robot control device 20 proceeds to S1607. Meanwhile, when it is necessary to stop welding (YES in S1606), the process of the robot control device 20 proceeds to S1608.

In S1607, the robot control device 20 receives welding information from the data processing device 50. The welding information received here is the correction signal calculated based on the time-series data, which has undergone the abnormality determination and the abnormality removal process, on the basis of feature points outputted by the data processing device 50 using the learned model. The details of generation of the welding information received in this step is as described in the above-mentioned Fig. 12. Subsequently, the process returns to S1605, and the robot control device 20 repeats the process using the received welding information.

In S1608, the robot control device 20 stops the welding control.

In S1609, the robot control device 20 commands the power supply device 30 to stop welding. The stop of welding is implemented by stopping the supply of the welding power.

In S1610, the robot control device 20 commands the data processing device 50 to stop generation of the welding information.

In S1611, the power supply device 30 receives a command to stop welding from the robot control device 20.

In S1612, the power supply device 30 controls the power supply circuit by a CPU which is not illustrated to stop the welding. Consequently, the operation of the robot control device 20 and the power supply device 30 is completed.

As described so far, this embodiment makes it possible to determine an abnormality of a feature point in the image data even under an environment where disturbance occurs. Furthermore, it is possible to perform processing based on the determined abnormality so that identification of image data is not affected.

### <Other Embodiments>

In the above-described embodiment, as illustrated in Fig. 6, feature points are acquired using the learned model, geometry quantity data is calculated by the calculating unit 519, and the abnormality determination process is performed on the time-series data of the geometry quantity data. However, without being limited to this configuration, for example, the learning model may be configured to perform the learning process up to the abnormality determination process to generate a learned model. In this case, the learning process may be configured to be performed with the learning data further including label information indicating an abnormality determination result. The label information here may be an abnormality flag, or a classification showing an abnormality cause. With this configuration, the learned model outputs label information for an input welding image, thereby making it possible to identify the portion where an abnormality has occurred and its abnormality cause for consecutive weld images. The calculating unit 519 may be configured to output a correction signal based on the label information which is an abnormality determination result output from the learned model. Alternatively, a learning process different from that of the learned model stated in the first embodiment may be performed, thus a learned model capable of outputting a result of label information mentioned above may be generated. In this case, output of the weld information, and output of the label information may be each performed using a plurality of learned models.

In the present invention, a program, and an application to implement the functions of the one or more embodiments described above are supplied to a system or an apparatus using a network or a storage medium and the like, and the functions can also be implemented by a process of reading and executing a program by one or more processors in a computer of the system or the apparatus.

Alternatively, the functions may be implemented by a circuit that implements one or more functions. Note that as the circuit that implements one or more functions, for example, ASIC (Application Specific Integrated Circuit) and FPGA (Field Programmable Gate Array) may be mentioned.

As described above, the present specification discloses the following matters.
(1) An abnormality determination method for determining an abnormality in information about one or a plurality of feature points extracted from image data, the abnormality determination method comprising:
   a calculating step for calculating geometric quantity data derived from the information about the one or plurality of feature points;
   an abnormality detection step for detecting abnormality for time-series data composed of the geometric quantity data by using one or a plurality of abnormality detection means that are predetermined in correspondence to an abnormality reason; and
   a determining step for determining an occurrence of an abnormality in the time-series data based on a detection result by the one or plurality of abnormality detection means.
   With this configuration, an abnormality of a feature point in image data can be determined even under an environment where disturbance occurs.
(2) The abnormality determination method according to (1),
   wherein the one or plurality of abnormality detection means include at least one of:
   means to determine whether a rate of detection of a feature point in one or a plurality of pieces of image data in a predetermined time is lower than or equal to a threshold value due to the abnormality reason of failure of recognition of a feature point from the image data;
   means to determine whether a feature point is out of a range defined by a predetermined outlier identification method due to the abnormality reason of misrecognition of a feature point from the image data; and
   means to determine whether a position between corresponding feature points recognized in adjacent pieces of image data is greater than or equal to a threshold value due to the abnormality reason of misrecognition of a feature point from the image data.
   With this configuration, an abnormality determination can be made in correspondence to various abnormality reasons caused by disturbances included in the image data.
(3) The abnormality determination method according to (1) or (2),
   wherein the image data includes at least one of a molten pool, an arc, or a welding wire as an object, and
   the feature point is extracted from the object.
   With this configuration, an abnormality determination can be made on a target which is an object related to welding.
(4) The abnormality determination method according to (3),
   wherein the geometric quantity data is at least one of coordinates of one or a plurality of feature points, a distance between the plurality of feature points, which are obtained from one object, an area formed by a plurality of feature points obtained from one object, and a distance between feature points in different objects.
   With this configuration, an abnormality determination can be made using geometry quantity data which captures the characteristics of each object identified from the image data.
(5) The abnormality determination method according to any one of (1) to (4), further comprising
   an acquisition step for acquiring the information about the one or plurality of feature points from the image data using a learned model,
   wherein for the learned model, a learning process is performed using learning data in which image data is associated with the information about the feature points acquired from the image data so that the learned model is configured to, for input of image data, output the information about the feature points associated with the image data.
   With this configuration, feature points in the image data can be acquired using the learned model.
(6) The abnormality determination method according to any one of (1) to (4),
   wherein in the determining step, label information about abnormality included in the image data is acquired from image data using a learned model,
   in the determining step, an occurrence of an abnormality in the time-series data is determined based on the label information, and
   for the learned model, a learning process is performed using learning data in which image data, information about feature points acquired from the image data, and the label information about abnormality included in the image data are associated with each other so that the learned model is configured to, for input of image data, output the label information about abnormality included in the image data.
   With this configuration, information about abnormality in the image data can be acquired using the learned model.
(7) A processing method for performing a process at time of abnormality in accordance with a determination result obtained by the abnormality determination method according to any one of (1) to (6),
   wherein for data of the time-series data in a period when an abnormality has occurred, the processing method includes a processing step for performing one of removal of the data in the period, correction of the data using a predetermined value, or correction of the data with a value immediately preceding the occurrence of the abnormality.
   With this configuration, it is possible to perform processing based on the determined abnormality so that identification of image data is not affected.
(8) The processing method according to (7), further comprising a filtering step for performing a filtering process using a predetermined filter on the time-series data which has been processed in the processing step.
   With this configuration, it is possible to reduce the effect on time-series data by the processing performed based on the determined abnormality.
(9) A processing method for performing a process at time of abnormality in accordance with a determination result obtained by the abnormality determination method according to any one of (1) to (6), the processing method including:
   an analysis step for analyzing a pattern of abnormality in the time-series data; and
   a step for correcting a setting condition for alarm or an abnormality reason based on an analysis result in the analysis step.
   With this configuration, following control can be performed based on the determined abnormality.
(10) An information processing apparatus for determining an abnormality in information about one or a plurality of feature points extracted from image data, the information processing apparatus comprising:
   a calculating unit configured to calculate geometric quantity data derived from the information about the one or plurality of feature points;
   an abnormality detection unit configured to detect an abnormality for time-series data composed of the geometric quantity data using one or a plurality of abnormality detection means that are predetermined in correspondence to an abnormality reason; and
   a determining unit configured to determine an occurrence of an abnormality in the time-series data based on a detection result by the one or plurality of abnormality detection means.
   With this configuration, an abnormality of a feature point in image data can be determined even under an environment where disturbance occurs.
(11) A welding system including the information processing apparatus according to (10).
   With this configuration, it is possible to provide a welding system capable of identifying an abnormality included in the image data, and performing welding control in correspondence to the abnormality.
(12) A program causing a computer to execute a process comprising:
   a calculating step for calculating geometric quantity data derived from information about one or a plurality of feature points extracted from image data;
   an abnormality detection unit configured to detect an abnormality for time-series data composed of the geometric quantity data using one or a plurality of abnormality detection means that are predetermined in correspondence to an abnormality reason; and
   a determining step for determining an occurrence of an abnormality in the time-series data based on a detection result by the one or plurality of abnormality detection means.
   With this configuration, an abnormality of a feature point in image data can be determined even under an environment where disturbance occurs.

Although various embodiments have been described above, it is needless to say that the present invention is not limited to those examples. It is apparent that various modification examples and alteration examples will occur to those skilled in the art within the scope described in the appended claims, and it should be understood that those examples naturally fall within the technical scope of the present invention. In a range without departing from the spirit of the invention, the components in the above embodiments may be combined in any manner.

The present application is based on Japanese Patent Application (No. 2022-057505) filed on March 30, 2022, the entire contents of which are incorporated herein by reference.

### Reference Signs List

1 welding system
10 welding robot
11 welding torch
12 wire feeding device
13 welding wire
14 backing member
20 robot control device
201 CPU
202 memory
202A control program
203 operation panel
204 teach pendant
205 robot connector
206 communication unit
30 power supply device
40 visual sensor
50 data processing device
510 body
511 CPU
512 GPU
513 ROM
514 RAM
515 non-volatile storage device
515A learning program
515B learned model
515C information generation program
515D image data
516 input-output interface
517 video output interface
518 communication interface
519 calculating unit
520 input unit
530 display
W work

## Claims

1. An abnormality determination method for determining an abnormality in information about one or a plurality of feature points extracted from image data, the abnormality determination method comprising:
a calculating step for calculating geometric quantity data derived from the information about the one or plurality of feature points;
an abnormality detection step for detecting abnormality for time-series data composed of the geometric quantity data by using one or a plurality of abnormality detection means that are predetermined in correspondence to an abnormality reason; and
a determining step for determining an occurrence of an abnormality in the time-series data based on a detection result by the one or plurality of abnormality detection means.

2. The abnormality determination method according to claim 1,
wherein the one or plurality of abnormality detection means include at least one of:
means to determine whether a rate of detection of a feature point in one or a plurality of pieces of image data in a predetermined time is lower than or equal to a threshold value due to the abnormality reason of failure of recognition of a feature point from the image data;
means to determine whether a feature point is out of a range defined by a predetermined outlier identification method due to the abnormality reason of misrecognition of a feature point from the image data; and
means to determine whether a position between corresponding feature points recognized in adjacent pieces of image data is greater than or equal to a threshold value due to the abnormality reason of misrecognition of a feature point from the image data.

3. The abnormality determination method according to claim 1,
wherein the image data includes at least one of a molten pool, an arc, or a welding wire as an object, and
the feature point is extracted from the object.

4. The abnormality determination method according to claim 3,
wherein the geometric quantity data is at least one of coordinates of one or a plurality of feature points, a distance between the plurality of feature points, which are obtained from one object, an area formed by a plurality of feature points obtained from one object, and a distance between feature points in different objects.

5. The abnormality determination method according to claim 1, further comprising
an acquisition step for acquiring the information about the one or plurality of feature points from the image data using a learned model,
wherein for the learned model, a learning process is performed using learning data in which image data is associated with the information about the feature points acquired from the image data so that the learned model is configured to, for input of image data, output the information about the feature points associated with the image data.

6. The abnormality determination method according to claim 1,
wherein in the determining step, label information about abnormality included in the image data is acquired from image data using a learned model,
in the determining step, an occurrence of an abnormality in the time-series data is determined based on the label information, and
for the learned model, a learning process is performed using learning data in which image data, information about feature points acquired from the image data, and the label information about abnormality included in the image data are associated with each other so that the learned model is configured to, for input of image data, output the label information about abnormality included in the image data.

7. A processing method for performing a process at time of abnormality in accordance with a determination result obtained by the abnormality determination method according to any one of claims 1 to 6,
wherein for data of the time-series data in a period when an abnormality has occurred, the processing method includes a processing step for performing one of removal of the data in the period, correction of the data using a predetermined value, or correction of the data with a value immediately preceding the occurrence of the abnormality.

8. The processing method according to claim 7, further comprising
a filtering step for performing a filtering process using a predetermined filter on the time-series data which has been processed in the processing step.

9. A processing method for performing a process at time of abnormality in accordance with a determination result obtained by the abnormality determination method according to any one of claims 1 to 6, the processing method comprises:
an analysis step for analyzing a pattern of abnormality in the time-series data; and
a step for correcting a setting condition for alarm or an abnormality reason based on an analysis result in the analysis step.

10. An information processing apparatus for determining an abnormality in information about one or a plurality of feature points extracted from image data, the information processing apparatus comprising:
a calculating unit configured to calculate geometric quantity data derived from the information about the one or plurality of feature points;
an abnormality detection unit configured to detect an abnormality for time-series data composed of the geometric quantity data using one or a plurality of abnormality detection means that are predetermined in correspondence to an abnormality reason; and
a determining unit configured to determine an occurrence of an abnormality in the time-series data based on a detection result by the one or plurality of abnormality detection means.

11. A welding system comprising an information processing apparatus for determining an abnormality in information about one or a plurality of feature points extracted from image data,
wherein the information processing apparatus includes:
a calculating unit configured to calculate geometric quantity data derived from the information about the one or plurality of feature points;
an abnormality detection unit configured to detect an abnormality for time-series data composed of the geometric quantity data using one or a plurality of abnormality detection means that are predetermined in correspondence to an abnormality reason; and
a determining unit configured to determine an occurrence of an abnormality in the time-series data based on a detection result by the one or plurality of abnormality detection means.

12. A program causing a computer to execute a process comprising:
a calculating step for calculating geometric quantity data derived from information about one or a plurality of feature points extracted from image data;
an abnormality detection unit configured to detect an abnormality for time-series data composed of the geometric quantity data using one or a plurality of abnormality detection means that are predetermined in correspondence to an abnormality reason; and
a determining unit configured to determine an occurrence of an abnormality in the time-series data based on a detection result by the one or plurality of abnormality detection means.
